# EUROPÄISCHE PATENTSCHRIFT

(11) **EP 1 133 763 B1**
(45) Veröffentlichungstag und Bekanntmachung des Hinweises auf die Patenterteilung: **25.09.2002**
(21) Anmeldenummer: 99964374.5
(22) Anmeldetag: 24.11.1999
(51) Int. Cl.: G08G 1/0968

(54) **NAVIGATIONSVERFAHREN UND NAVIGATIONSGERÄT FÜR FORTBEWEGUNGSMITTEL**
NAVIGATING METHOD AND NAVIGATING DEVICE FOR MEANS OF TRANSPORT
PROCEDE ET APPAREIL DE NAVIGATION DESTINE A UN MOYEN DE DEPLACEMENT

(30) Priorität: 24.11.1998 DE 19854126
(43) Veröffentlichungstag der Anmeldung: 19.09.2001
(73) Patentinhaber: ROBERT BOSCH GMBH, 70442 Stuttgart (DE)
(72) Erfinder: BLACK, Karl-Heinz, D-31139 Hildesheim (DE); FRICKE, Walter, D-31162 Bad Salzdetfurth (DE)
(86) Internationale Anmeldenummer: DE9903728
(87) Internationale Veröffentlichungsnummer: WO00031709

(56) Entgegenhaltungen:
- EP-A- 0 330 787
- EP-A- 0 773 525
- PATENT ABSTRACTS OF JAPAN vol. 1998, no. 01, 30. Januar 1998 (1998-01-30) & JP 09 244529 A (N T T CHUBU TELECON KK), 19. September 1997 (1997-09-19)
- PATENT ABSTRACTS OF JAPAN vol. 1997, no. 06, 30. Juni 1997 (1997-06-30) & JP 09 044797 A (CLARION CO LTD), 14. Februar 1997 (1997-02-14)

## Beschreibung

### Technisches Gebiet

Die Erfindung betrifft ein Navigationsverfahren für ein Fortbewegungsmittel, insbesondere für ein Fahrzeug, Kraftfahrzeug, Schiff oder Flugzeug, zur Navigation von einem Standort zu einem Zielort, wobei Befehle und/oder der Zielort und ggf. der Standort in einem Navigationsgerät eingegeben werden, gemäß dem Oberbegriff des Anspruchs 1. Die Erfindung betrifft ferner ein Navigationsgerät für ein Fortbewegungsmittel, insbesondere für ein Fahrzeug, Kraftfahrzeug, Schiff oder Flugzeug, zur Navigation von einem Standort zu einem Zielort, wobei eine Eingabevorrichtung zur Eingabe von Befehlen und/oder des Zielortes und ggf. des Standortes vorgesehen ist, gemäß dem Oberbegriff des Anspruchs 6.

### Stand der Technik

In Fortbewegungsmitteln, wie beispielsweise Kraftfahrzeugen, Flugzeugen oder Schiffen, fest installierte Navigationsgeräte leiten einen Führer des Fortbewegungsmittels schnell, einfach und sicher von einem aktuellen Standort zu einem gewünschten Zielort, ohne dass der Führer des Fortbewegungsmittels vorher aufwendig eine Route planen und entsprechendes Kartenmaterial erwerben muss. Hierzu liegen entsprechende, beispielsweise auf Karten, Landkarten oder Straßenkarten basierende, Navigationsdaten in dem Navigationsgerät beispielsweise auf CD-ROM gespeichert vor. Das Navigationsgerät nutzt beispielsweise GPS (Global Positioning System) um einen momentanen Standort festzustellen und entsprechende Navigationsanweisungen zu berechnen, welche zu einem vorbestimmten Ziel führen. Die Navigationsdaten beinhalten dabei vorzugsweise Daten über Straßen und Wege für Kraftfahrzeuge.

Bevor jedoch das Navigationsgerät seine Aufgabe übernehmen und eine Route vom Standort zum Zielort berechnen kann, ist es notwendig, dass ein Benutzer den gewünschten Zielort und ggf. auch den aktuellen Standort eingibt. Dies erfolgt beispielsweise über eine Tastatur oder ein ahnliches manuelle zu betätigendes Eingabegerät. Dies ist jedoch umständlich sowie zeitraubend und erfordert gewisse Grundkenntnisse bei der Bedienung des Navigationsgeräts.

Patent Abstract of Japan, PN09 244 529 offenbart die Möglichkeit, Navigationsziele auf einer Floppy-Disc zu speichern und diese mittels eines Diskettenlaufwerks von der Floppy-Disc in ein Navigationsgerät einzulesen.

Patent Abstract of Japan, PN09 044 797 offenbart ein Fahrerinformationssystem, das eine ermittelte Fahrzeugposition abspeichert und zusammen mit einer Kartendarstellung anzeigt.

EP 0 330 787 A2 offenbart ein Navigationsgerät mit einem ersten Speicher für Grundkartendaten und einem zweiten Speicher für verfeinerte oder aktualisierte Kartendaten oder für besonders interessierende oder persönliche Ziele, wobei der zweite Speicher in Form einer Chipkarte ausgeführt sein kann.

### Darstellung der Erfindung, Aufgabe, Lösung und Vorteile

Es ist Aufgabe der vorliegenden Erfindung, ein verbessertes Navigationsverfahren und ein Navigationsgerät der obengenannten Art zur Verfügung zu stellen, welche die obengenannten Nachteile beseitigen und einfacher und komfortabel zu bedienen sind.

Diese Aufgabe wird durch ein Navigationsverfahren der o. g. Art mit den in Anspruch 1 angegebenen Merkmalen und durch ein Navigationsgerät der o. g. Art mit den in Anspruch 6 angegebenen Merkmalen gelöst.

Dazu ist es bei einem Verfahren der o. g. Art erfindungsgemäß vorgesehen, dass zur Eingabe Daten aus einer Speicherkarte eines Autoradios ausgelesen, die ausgelesenen Daten an das Navigationsgerät übertragen und ggf. in einem Zielspeicher des Navigationsgeräts gespeichert werden.

Dies hat den Vorteil, dass eine erheblich vereinfachte Bedienung des Navigationsgeräts erzielt wird, da beispielsweise der Zielort nicht mehr umständlich Buchstabe um Buchstabe über eine Eingabevorrichtung eingegeben werden muss, sondern einfach durch Auslesen des gewünschten Zielortes aus einem Speicher der Speicherkarte dem Navigationsgerät mitgeteilt wird.

Vorzugsweise Weitergestaltungen des Navigationsverfahrens sind in den abhängigen Verfahrensansprüchen beschrieben.

Zweckmäßigerweise wird zum Auslesen von Daten aus der Speicherkarte ein Speicherkarten-Leser eines Autoradios verwendet.

In einer bevorzugten Ausbildung des Verfahrens werden die Daten auf der Speicherkarte in einem frei verfügbaren Speicherbereich dieser, insbesondere zu einem freien Speicherplatz, abgelegt.

Eine einfache und komfortable Art der Speicherung von beispielsweise Zieldaten auf der Speicherkarte erzielt man dadurch, dass die Daten auf der Speicherkarte mittels eines Computers und eines daran, beispielsweise über eine Standardschnittstelle, angeschlossenen Karten-Schreib/Lesegerätes abgespeichert werden. Hierdurch sind ferner benutzerspezifische Zieldaten auf mehreren Memorycards für eine Fahrzeugflotte abspeicherbar, so dass diese benutzerspezifische Zieldaten auf allen Flottenfahrzeugen gleichermaßen zur Verfügung stehen.

Bei einem Navigationsgerät der o.g. Art ist es erfindungsgemäße vorgesehen, dass die Eingabevorrichtung einen Leser für eine Speicherkarte eines Autoradios umfasst.

Dies hat den Vorteil, dass eine vereinfachte Eingabe am Navigationsgerät möglich ist, wobei lediglich aus vorbestimmten, auf der Speicherkarte gespeicherten Daten, wie beispielsweise Zielorten, auszuwählen ist, ohne umständliche Buchstabenauswahl aus einer Zeichentabelle.

Vorzugsweise Weitergestaltungen des Navigationsgeräts sind in den abhängigen Sachansprüchen beschrieben.

In einer besonders einfachen Ausführungsform ist das Navigationsgerät mit einem Autoradio und einem am Autoradio vorhandenen Memorycard-Leser derart verbunden, dass auf der Speicherkarte gespeicherte Daten von dem Navigationsgerät abrufbar sind. Hierdurch ist keine zusätzliche Hardware für das Navigationsgerät zum Auslesen der Speicherkarte erforderlich.

Zweckmäßigerweise umfassen die auf der Speicherkarte gespeicherten Daten wenigstens einen Zielort für das Navigationsgerät. Hierbei ist je nach zur Verfügung stehendem Speicherplatz auch eine größere Anzahl von Zielorten abspeicherbar.

Das Navigationsgerät ist in besonders vorteilhafter Weise in das Autoradio integriert.

### Kurze Beschreibung der Zeichnungen

Nachstehend wird die Erfindung anhand der beigefügten Zeichnungen näher erläutert. Diese zeigen in Figur 1 in einer schematischen Blockschaltbilddarstellung eine bevorzugte Ausführungsform eines erfindungsgemäßen Navigationsgeräts, in den Figuren 2A und 2B schematisch Speicherkarten zur Aufnahme der in ein erfindungsgemäßes Navigationsgerät einzuspeisenden Navigationsdaten, in Figur 3 die Frontansicht einer bevorzugten Ausführungsform des erfindungsgemäßen Navigationsgeräts.

### Bester Weg zur Ausführung der Erfindung

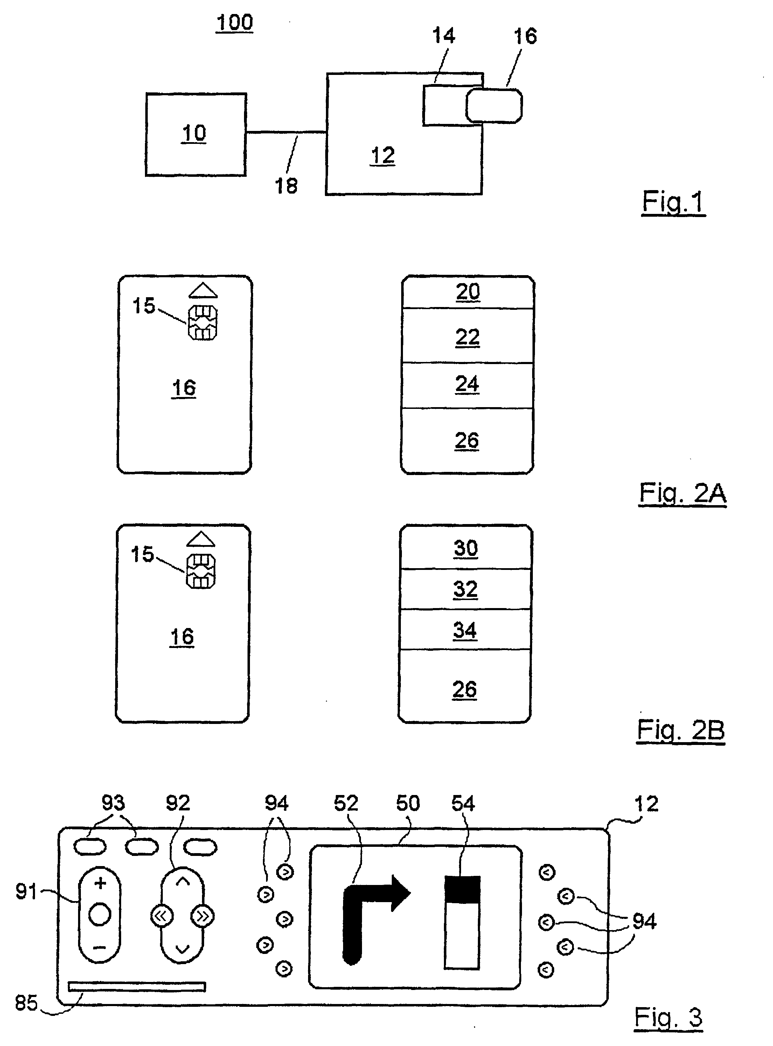

Die in Figur 1 dargestellte, bevorzugte Ausführungsform eines erfindungsgemäßen Navigationsgeräts 100 umfasst einen Navigationsprozessor 10 und ein mit diesem verbundenes Autoradio 12. Das Autoradio 12 umfasst ferner ein Speicherkarten-Lesegerät 14 für eine Speicherkarte 16. Der Navigationsprozessor 10 ist über eine Leitung 18 mit dem Autoradio 12 derart verbunden, dass auf der Speicherkarte 16 gespeicherte Daten von dem Navigationsprozessor 10 auslesbar sind. Das Navigationsgerät 100 ist somit eine Kombination aus dem Navigationsprozessor 10 und einem Autoradio 12.

Figur 3 zeigt ein konkretes Ausführungsbeispiel des erfindungsgemäßen Navigationsgeräts nach Figur 1.

Dargestellt ist zum einen die Frontkappe eines Autoradios 12, über dessen Bedienelemente 91, 92, 93, 94 das erfindungsgemäße Navigationsgerät bedient wird und an dessen Anzeige 50 Fahrtanweisungen, im vorliegenden Fall in Form eines Richtungspfeils 52 und einer Restentfernungsanzeige 54, dargestellt werden. Die Autoradiokappe umfasst Bedienelemente in Form von einfachen Drucktasten 93, 94 und ein- bzw. zweidimensionalen Wipptasten 91, 92. Des weiteren verfügt das Autoradio über ein Speicherkarten-Lesegerät 14, das in Figur 3 in Form des Kartenschachtes 85 zur Aufnahme einer Speicherkarte dargestellt ist.

In das Speicherkarten-Lesegerät, bzw. den Kartenschacht 85 des Speicherkarten-Lesegeräts 14 ist eine Speicherkarte 16 einführbar, wobei die auf der Speicherkarte gespeicherten Informationen über das Kontakffeld 15 der Speicherkarte vom Speicherkarten-Lesegerät 14 auswertbar sind.

In den Figuren 2A und 2B sind Beispiele für Speicherkarten 16 zur Verwendung in dem erfindungsgemäßen Navigationsgerät bzw. dem erfindungsgemäßen Verfahren dargestellt.

Bei den genannten Speicherkarten handelt es sich im Falle der Figur 2A um eine sogenannte Key-Card, die zur Inbetriebnahme eines diebstahlgeschützten Geräts in dessen Speicherkarten-Lesegerät eingelegt werden muss, wobei eine Inbetriebnahme des Geräts nur dann möglich ist, wenn die auf der Speicherkarte abgelegten Identifizierungsinformationen vom geschützten Gerät als berechtigt angesehen werden. Die Key-Card gemäß Figur 2A umfasst dabei einen ersten Bereich 20, in dem Chipdaten abgelegt sind. Weiter umfaßt die Speicherkarte 16 einen zweiten Bereich 22 in Form eines Nur-Lese-Speichers (PROM), in dem die zur Identifizierung des Benutzers bzw. Kartenbesitzers erforderlichen und/oder zusätzliche Informationen des zugehörigen Geräts, wie dessen Seriennummer o. ä. gespeichert sind. Weiterhin umfasst die Speicherkarte 16 einen dritten Speicherbereich, hier in Form eines lösch- und wieder beschreibbaren Speichers (EEPROM), in dem beispielsweise eine sogenannte Turn-On-Message, also eine Nachricht, die beim Einschalten des zugehörigen Geräts 12 angezeigt oder akustisch wiedergegeben wird, abgelegt ist. Schließlich umfasst die Speicherkarte einen vierten, durch den Benutzer frei programmierbaren Speicherbereich, vorzugsweise in Form eines RAM-Speichers, in den wenigstens Navigations-Zielinformationen einprogrammierbar sind.

In Figur 2B ist eine Speicherkarte 16 in Form einer sogenannten TMC-Karte dargestellt. Es handelt sich dabei um eine solche Speicherkarte, die neben reinen Speicherbereichen auch einen ersten Bereich 30 mit einem Prozessor und zugehörigem Betriebsprogramm umfaßt. Im Falle der TMC- (traffic message channel) Karte handelt es sich bei dem Prozessor um einen TMC-Prozessor, der aus mittels eines RDS-Rundfunkempfängers empfangenen Radio-Daten-Signalen die darin enthaltenen TMC-Daten, also verschlüsselte Verkehrsinformations-Daten isoliert, und diese in Klartext oder in synthetische Sprache umsetzt, so daß die verschlüsselt über RDS übertragenen Verkehrsinformationen dem Benutzer in verständlicher Form zur Kenntnis gebracht werden können.

Die besagte TMC-Speicherkarte 16 nach Figur 2B umfasst einen zweiten und einen dritten Speicherbereich 32 und 34, in denen weitere Daten und Funktionen für weitere Applikationen abgelegt sind. Schließlich weist die TMC-Speicherkarte 16 einen vierten, durch den Benutzer frei programmierbaren Speicherbereich 26 auf, in den Informationen für das Navigationsgerät, beispielsweise eine Zielort für eine Fahrtstrecke, ablegbar sind.

Auf der Speicherkarte 16 wurden zuvor Daten beispielsweise in einem freien Speicherplatz 26 gespeichert. Hierzu ist beispielsweise ein Personal Computer mit einer entsprechenden Software und einem entsprechenden Schreib-/Lesegerät vorgesehen, wobei beispielsweise benutzerspezifische Zielortdaten in den PC eingegeben und über das Schreib-/Lesegerät und eine Standardschnittstelle in der Speicherkarte 16 gespeichert werden. Auf diese Weise können beispielsweise alle Speicherkarten 16 einer Fahrzeugflotte mit den gleichen, benutzerspezifischen Zielortdaten versehen werden, so dass diese Zielorte in allen Flottenfahrzeugen gleichermaßen zur Verfügung stehen. Hierbei müssen diese Daten nur einmal in den Computer eingegeben werden. Lediglich der Schreibvorgang ist entsprechend der Anzahl der zu beschreibenden Speicherkarten 16 entsprechend oft zu wiederholen, was jedoch wenig zeitaufwendig ist.

In einer alternativen Ausführungsform der Erfindung ist es vorgesehen, dass die auf der Speicherkarte 16 gespeicherten Daten in einen internen Zielspeicher des Navigationsgeräts übernommen bzw. abgespeichert werden und von dort direkt über einen kurzen Bedienbefehl aufrufbar bzw. auswählbar sind. In diesem Fall ist eine einzige Speicherkarte 16 zum Programmieren jeweiliger Navigationsgeräte mehrerer Flottenfahrzeuge ausreichend.

Nach Einstecken der Speicherkarte 16 in das Autoradio 12 stehen die auf dieser gespeicherten Daten für wenigstens einen Zielort zum Abruf durch den Navigationsprozessor 10 zur Verfügung. Diese können dann von einem Benutzer direkt ausgewählt werden, ohne umständlich mit Buchstabenauswahl in einer Zeichentabelle Zielortnamen eingeben zu müssen. Ggf. wird für die Speicherung mehrerer Zielorte eine Speicherkarte 16 mit erweitertem Speicherplatz verwendet.

## Patentansprüche

1. Mavigationsverfahren für ein Fortbewegungsmittel, insbesondere für ein Fahrzeug, Kraftfahrzeug, Schiff oder Flugzeug, zur Navigation von einem Standort zu einem Zielort, wobei Befehle und/oder der Zielort und ggf. der Standort in einem Navigationsgerät (100) eingegeben werden,
**dadurch gekennzeichnet, dass**
zur Eingabe Daten aus einer Speicherkarte (16) eines Autoradios (12) ausgelesen und die ausgelesenen Daten an das Havigationsgerät (100) übertragen werden.

2. Navigationsverfahren nach Anspruch 1,
**dadurch gekennzeichnet, dass**
zum Auslesen von Daten aus der Speicherkarte (16) ein Speicherkarten-Leser (14) des Autoradios (12) verwendet wird.

3. Navigationsverfahren nach Anspruch 1 oder 2,
**dadurch gekennzeichnet, dass**
die Daten auf der Speicherkarte (16) in einem frei verfügbaren Speicherbereich (26) der Speicherkarte (16), insbesondere zu einem freien Speicherplatz, abgelegt werden.

4. Navigationsverfahren nach einem der vorhergehenden Ansprüche,
**dadurch gekennzeichnet, dass**
die Daten auf der Speicherkarte (16) mittels eines Computers und eines daran angeschlossenen Karten-Schreib-/Lesegerätes abgespeichert werden.

5. Navigationsverfahren nach einem der vorhergehenden Ansprüche,
**dadurch gekennzeichnet, dass**
die aus der Speicherkarte (16) ausgelesenen Navigationsdaten in einem Zielspeicher des Navigationsgeräts (100) gespeichert werden.

6. Navigationsgerät (100) für ein Fortbewegungsmittel, insbesondere für ein Fahrzeug, Kraftfahrzeug, Schiff oder Flugzeug, zur Navigation von einem Standort zu einem Zielort, wobei eine Eingabevorrichtung zur Eingabe von Befehlen und/oder des Zielortes und ggf. des Standortes vorgesehen ist,
**dadurch gekennzeichnet, dass**
die Eingabevorrichtung einen Leser (14) für eine Speicherkarte (16) eines Autoradios (12) umfasst.

7. Navigationsgerät (100) nach Anspruch 6,
**dadurch gekennzeichnet, dass**
das Navigationsgerät (100) mit einem einen Speicherkarten-Leser (14) aufweisenden Autoradio (12) derart verbunden ist, dass auf der Speicherkarte (16) gespeicherte Daten von dem Navigationsgerät (100) abrufbar sind.

8. Navigationsgerät (100) nach Anspruch 6,
**dadurch gekennzeichnet, dass**
ein Navigationsprozessor (10) mit einem Autoradio (12) und
einem am Autoradio (12)vorhandenen Speicherkarten-Leser (14) derart verbunden ist, dass auf der Speicherkarte (16) gespeicherte Daten von dem Navigationsprozessor (10) abrufbar sind,
oder dass
ein Autoradio (12) mit integriertem Navigationsprozessor (10) mit einem am Autoradio (12) vorhandenen Speicherkarten-Leser (14) derart verbunden ist,
dass auf der Speicherkarte (16) gespeicherte Daten von dem Navigationsprozessor (10) abrufbar sind.

9. Navigationsgerät (100) nach einem der Ansprüche 6 bis 8,
**dadurch gekennzeichnet, dass**
die auf der Speicherkarte (16) gespeicherten Daten wenigstens einen Zielort für das Navigationsgerät (100) oder den Navigationsprozessor (10) umfassen.

10. Navigationsgerät (100) nach wenigstens einem der Ansprüche 6 bis 9,
**dadurch gekennzeichnet, dass**
das Navigationsgerät (100) oder der Navigationsprozessor (10) in das Autoradio (12) integriert ist.

## Claims

1. Navigating method for a means of transport, in particular for a vehicle, motor vehicle, ship or aircraft, for navigating from a location to a destination, instructions and/or the destination and, if appropriate, the location being input into a navigation device (100), **characterized in that**, for the inputting process, data is read out of a memory card (16) of a car radio (12) and the read-out data is transmitted to the navigation device (100).

2. Navigating method according to Claim 1, **characterized in that** a memory card reader (14) of the car radio (12) is used to read out data from the memory card (16).

3. Navigating method according to Claim 1 or 2, **characterized in that** the data on the memory card (16) is stored in a freely available memory area (26) of the memory card (16), in particular at a free memory location.

4. Navigating method according to one of the preceding claims, **characterized in that** the data on the memory card (16) is stored by means of a computer and a card writer/reader which is connected thereto.

5. Navigating method according to one of the preceding claims, **characterized in that** the navigation data which is read out of the memory card (16) is stored in a destination memory of the navigation device (100).

6. Navigation device (100) for a means of transport, in particular for a vehicle, motor vehicle, ship or aircraft, for navigation from a location to a destination, an input device for inputting instructions and/or the destination and, if appropriate, the location being provided, **characterized in that** the input device comprises a reader (14) for a memory card (16) of a car radio (12).

7. Navigation device (100) according to Claim 6, **characterized in that** the navigation device (100) is connected to a car radio (12) having a memory card reader (14), in such a way that data stored on the memory card (16) can be called by the navigation device (100).

8. Navigation device (100) according to Claim 6, **characterized in that** a navigation processor (10) is connected to a car radio (12) and to a memory card reader (14) which is present at the car radio (12), in such a way that data stored on the memory card (16) can be called by the navigation processor (10), or **in that** a car radio (12) is connected to an integrated navigation processor (10) with a memory card reader (14) which is present at the car radio (12), in such a way that data stored on the memory card (16) can be called by the navigation processor (10).

9. Navigation device (100) according to one of Claims 6 to 8, **characterized in that** data stored on the memory card (16) comprises at least a destination for the navigation device (100) or the navigation processor (10).

10. Navigation device (100) according to at least one of Claims 6 to 9, **characterized in that** the navigation device (100) or the navigation processor (10) is integrated into the car radio (12).

## Revendications

1. Procédé de navigation pour un moyen de déplacement, notamment pour un véhicule, un véhicule à moteur, un navire ou un avion, pour naviguer d'un point de départ à un endroit de destination, les ordres et/ou l'endroit de destination et le cas échéant le point de départ étant introduits dans un appareil de navigation (100),
**caractérisé en ce que**
pour l'introduction, on extrait les données d'une carte de mémoire (16) d'un autoradio (12) et on transmet les données ainsi extraites à l'appareil de navigation (100).

2. Procédé de navigation selon la revendication 1,
**caractérisé en ce que**
pour extraire des données de la carte de mémoire (16) on utilise le lecteur de carte de mémoire (14) de l'autoradio (12).

3. Procédé de navigation selon l'une quelconque des revendications 1 ou 2,
**caractérisé en ce que**
les données se trouvent dans la carte de mémoire (16) dans une zone de mémoire (26) librement disponible de la carte de mémoire (16), notamment dans un emplacement de mémoire, libre.

4. Procédé de navigation selon l'une quelconque des revendications précédentes,
**caractérisé en ce que**
les données sont enregistrées sur la carte de mémoire (16) à l'aide d'un ordinateur et de l'appareil écriture/lecture de carte relié à cet ordinateur.

5. Procédé de navigation selon l'une quelconque des revendications précédentes,
**caractérisé en ce que**
les données de navigation extraites de la carte de mémoire (16) sont enregistrées dans une mémoire de destination de l'appareil de navigation (100).

6. Appareil de navigation (100) pour un moyen de déplacement (moyen de transport) notamment un véhicule, un véhicule automobile, un navire ou un avion, pour la navigation d'un point de départ à un point de destination, un dispositif d'entrée étant prévu pour introduire les ordres et/ou la destination et le cas échéant le point de départ,
**caractérisé en ce que**
l'installation d'entrée est un lecteur (14) pour une carte de mémoire (16) d'un autoradio (12).

7. Appareil de navigation (100) selon la revendication 6,
**caractérisé en ce qu'**
il (100) est relié à un autoradio (12) ayant un lecteur de carte de mémoire (14) de façon que les données enregistrées sur la carte de mémoire (16) puissent être appelées par l'appareil de navigation (100).

8. Appareil de navigation (100) selon la revendication 6,
**caractérisé en ce qu'**
un processeur de navigation (10) est relié à un autoradio (12) et à un lecteur de carte de mémoire (14) associé à l'autoradio (12) de façon que les données enregistrées sur la carte de mémoire (16) puissent être appelées par le processeur de navigation (10), ou
un autoradio (12) avec un processeur de navigation (10), intégré, est relié à un lecteur de carte de mémoire (14) existant dans l'autoradio (12), de façon à pouvoir appeler les données du processeur de navigation (10) enregistrées sur la carte de mémoire (16).

9. Appareil de navigation (100) selon l'une quelconque des revendications 6 à 8,
**caractérisé en ce que**
les données enregistrées sur la carte mémoire (16) comprennent au moins une destination pour l'appareil de navigation (100) ou le processeur de navigation (10).

10. Appareil de navigation (100) selon au moins l'une quelconque des revendications 6 à 9,
**caractérisé en ce qu'**
il (100) ou le processeur de navigation (10) sont intégrés dans l'autoradio (12).
